# EUROPEAN PATENT SPECIFICATION

(11) **EP 3 321 808 B1**
(45) Date of publication and mention of the grant of the patent: **02.01.2019**
(21) Application number: 17198379.4
(22) Date of filing: 25.10.2017
(51) Int. Cl.: G06F 11/36, G06F 11/22, G06F 11/34

(54) **VERIFICATION SYSTEM AND VERIFICATION METHOD**
VERIFIZIERUNGSSYSTEM UND VERIFIZIERUNGSVERFAHREN
SYSTÈME ET PROCÉDÉ DE VÉRIFICATION

(30) Priority: 10.11.2016 JP 2016219477
(43) Date of publication of application: 16.05.2018
(73) Proprietor: Hitachi, Ltd., Tokyo 100-8280 (JP)
(72) Inventor: MORI, Takuro, Chiyoda-ku, Tokyo 100-8280 (JP); MYOJIN, Tomoyuki, Chiyoda-ku, Tokyo 100-8280 (JP); OGAWA, Hideto, Chiyoda-ku, Tokyo 100-8280 (JP); NAKAGAWA, Yuichiroh, Chiyoda-ku, Tokyo 100-8280 (JP)
(74) Representative: Moore, Graeme Patrick

(56) References cited:
- JP-A- 2007 140 688
- US-A- 6 002 869
- US-A1- 2004 060 039

## Description

### BACKGROUND OF THE INVENTION

The present invention relates to a system that verifies the functions of an information processing system.

The configuration of computer systems in recent years has increased in fluidity as a result of an increase in the number of mobile terminals as well as terminals accompanying the advent of the Internet of Things (IoT), and the software and system configuration sometimes change successively after product shipment.

In a test process performed during typical product development, many variations in the system are imagined when performing tests prior to shipping. In changing systems, there is a massive amount of variation, and thus, a comprehensive test that covers all imagined scenarios is unrealistic from a cost perspective. Also, in a system where it is not realistically possible to anticipate all changes that can occur after shipment, there is a need for development that takes into consideration additional tests after shipment.

As a compromise, a standard system configuration and function combination are defined, and tests for such a system are adopted. When updating software, a test is performed to confirm whether similar results can be attained to results of the aforementioned standard testing.

JP 2007-140688 A (Patent Document 1) discloses a method for extracting the additional test range for when a certain software function is updated according to software dependence relationship information. As a result, it is possible to narrow down the test range during updating.

JP 2005-327274 A (Patent Document 2) discloses a method for confirming the effectiveness of a patch by executing test code when applying the patch. As a result, it is possible to extract any problems dependent on the device environment of the terminal to be updated.

US 6 002 869 A describes a test automation system for performing functional tests of a software program. The system includes a plurality of test functions each configured to test a discrete component of the software program. A user-defined test specification associated with the program provides state definitions that specify a desired test approach for each type of test procedure to be performed on the program. A test engine creates all test cases appropriate for a user-selected test type and controls the software program, applying the test functions and state definitions in accordance with the test specification.

US 2004/0060039A describes a test support process and a test support program for producing a post-update test pattern when a program under test is updated. When a program under development is updated, a post-update operation description defining details of an operation of a function included in the program under development after the update is acquired.

### SUMMARY OF THE INVENTION

In a test method according to an existing technique, if the system configuration enters an atypical state due to configuration modifications made after system delivery, device updates, and the like, an untested sequence included in the software or hardware installed in the system is sometimes executed. Faults present in the sequence appear after the system has been shipped, which results in high reworking costs and a high impact on the delivery schedule. In order to solve this problem, there is a need to provide a test method that can handle modifications in the system structure while mitigating initial test cost increases, for a system that has the possibility of undergoing continuous change.

Accordingly, a verification system in accordance with the invention is defined in the appended independent claim 1.

A representative aspect of the present invention is as follows.

A verification system that verifies functions of a plurality of information processing systems, the verification system comprising: a verification center; and a plurality of function management systems that are coupled through a network to the verification center, wherein the verification center has a first processor and a first storage device accessed by the first processor, wherein each of the function management systems has a second processor and a second storage device accessed by the second processor, wherein the second storage device retains function management information for associating a function of each of the information processing systems corresponding to each of the function management systems; a range of parameter values that can be set for the function; a range of parameter values, among the range of parameter values that can be set, for the functions that have been verified for when the parameter values have been set; and actually set parameter values, wherein, if the actually set parameter value is modified to a value outside of the verified range, then prior to the modification, the second processor transmits to the verification center a verification request of the function in which a parameter value in a range including the modified value is set, and wherein the first processor executes verification on the basis of the verification request, and transmits results thereof to the function management system from which the verification request was transmitted.

According to a representative aspect of the present invention, the information processing system extracts the minimum necessary test for functions to be used, and performs verification on the basis of the configuration information of the environment to be used. Thus, a balance can be achieved between reduction in cost for verification and maintaining verification quality. Problems, configurations, and effects other than what was described above are made clear by the description of embodiments below.

### BRIEF DESCRIPTION OF THE DRAWINGS

FIG. 1A is a block diagram showing a function configuration example of an entire verification system including a function management system and a verification center of an embodiment of the present invention.
FIG. 1B is a block diagram showing a hardware configuration example of the function management system of an embodiment of the present invention.
FIG. 2A is a block diagram showing a function configuration example of the verification center of an embodiment of the present invention.
FIG. 2B is a block diagram showing a hardware configuration example of the verification center of an embodiment of the present invention.
FIG. 3 is a descriptive view of an example of system configuration information according to an embodiment of the present invention.
FIG. 4 is a descriptive view of an example of function management information according to an embodiment of the present invention.
FIG. 5 is a descriptive view of an example of verification range information according to an embodiment of the present invention.
FIG. 6 is a descriptive view of an example of verification result information according to an embodiment of the present invention.
FIG. 7 is a descriptive view of another example of the function management information according to an embodiment of the present invention.
FIG. 8 is a flowchart showing an example of a verification request process executed by the function management system according to an embodiment of the present invention, and a verification result transmission process executed by the verification center according to the verification request process.
FIG. 9 is a flowchart showing an example of a process from prior to delivery to operation of an information processing system according to an embodiment of the present invention.
FIG. 10 is a descriptive view of a first example of a function management console that is the display screen of the function management information according to an embodiment of the present invention.
FIG. 11 is a descriptive view of a second example of a function management console that is the display screen of the function management information according to an embodiment of the present invention.
FIG. 12 is a flowchart showing an example of a function information transmission process performed by the verification center in which the verification center of an embodiment of the present invention transmits the verification result information without having received verification request information.

### DETAILED DESCRIPTION OF EMBODIMENTS

An embodiment of the present invention will be explained below with reference to drawings.

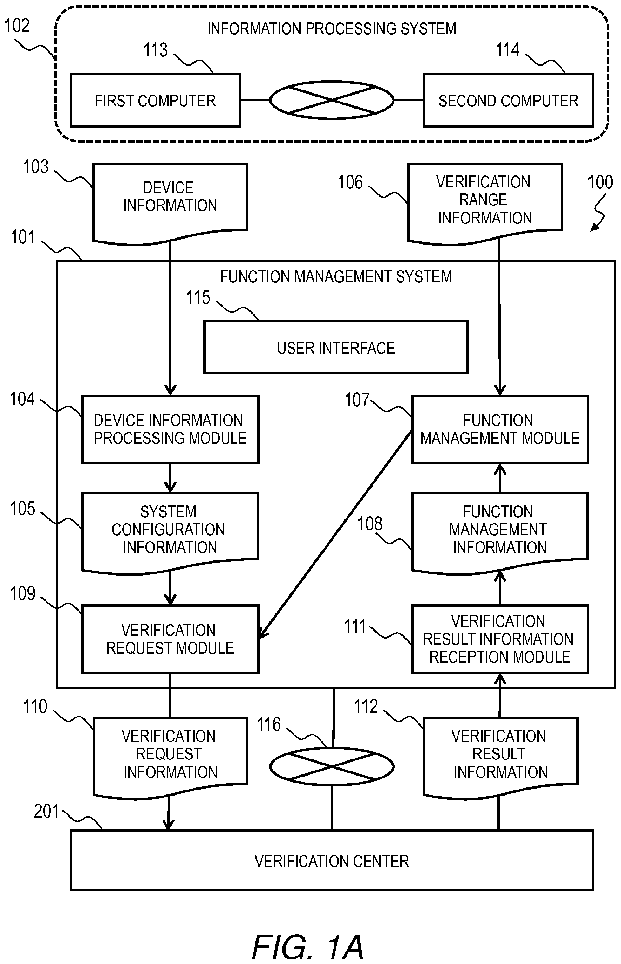

A function management system 101 (see FIG. 1A, etc.) according to the present embodiment is associated with an information processing system having one or more computers, receives device information 103, and creates system configuration information 105 by performing analysis using a device information processing module 104.

Also, the function management system 101 receives verification range information 106, and a function management module 107 determines the necessity of verification on the basis of function management information 108 and the system configuration information 105. If there is a need for verification, a verification request module 109 transmits verification request information 110 for the function to a verification center 201. A verification result information reception module 111 receives verification result information 112 pertaining to the verification of the function and updates the function management information 108.

According to the present embodiment, a user of the information processing system 102 (such as a manager of the information processing system) can prevent the use of a problematic configuration and function in order for the verification center 201 to determine whether the function can be used, prior to starting use of the function.

An embodiment of the present invention will be described with reference to FIGs. 1A to 12.

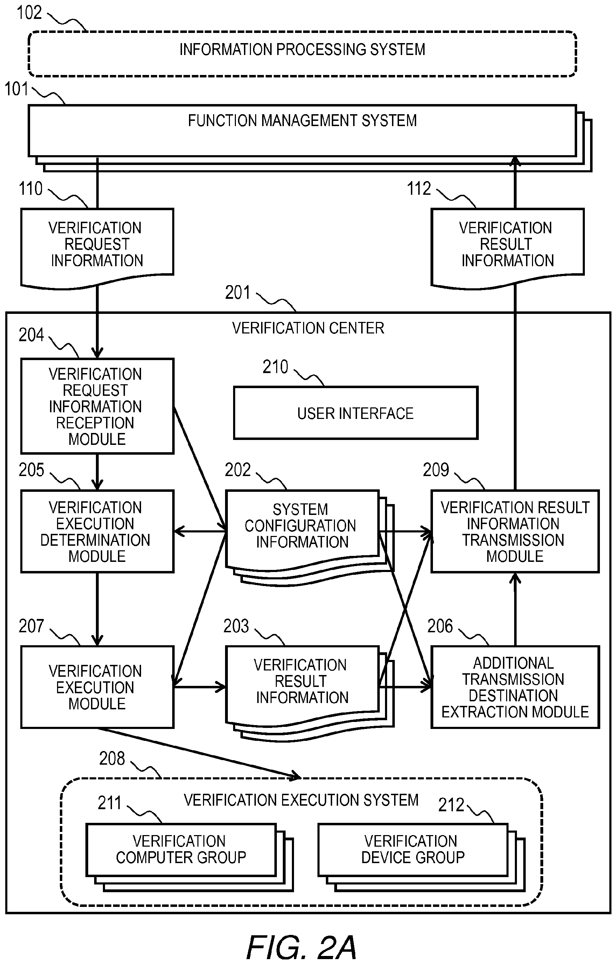

FIG. 1A is a block diagram showing a function configuration example of an entire verification system 100 including the function management system 101 and the verification center 201 of an embodiment of the present invention. A detailed configuration example of the verification center will be described later with FIG. 2A, etc.

The information processing system 102 includes a plurality of computers, for example, and the devices such as the computers are connected through the communication network so as to be able to communicate bidirectionally. FIG. 1A shows a first computer 113 and a second computer 114, but besides this configuration, the information processing system 102 may include three or more computers or just one computer.

The function management system 101 is constituted of one computer, for example, and is connected to the verification center 201 through the communication network 116 so as to be able to communicate therewith bidirectionally. In FIG. 1A, the information processing system 102 and the function management system 101 correspond one-to-one, but may alternatively correspond multiple-to-one or one-to-multiple. The verification system 100 may be constituted of a plurality of function management systems 101 and one verification center 201, with each of the plurality of information processing systems 102 corresponding to each of the plurality of function management systems 101, and the plurality of function management systems 101 being connected to one verification center 201 through the communication network 116. In such a case, one verification center 201 verifies the functions of the plurality of information processing systems 102 according to requests from the plurality of function management systems 101. Alternatively, the function management systems 101 and the verification center 201 may be integrated.

The verification center 201 includes a plurality of computers, and includes a verification execution system 208 (see FIG. 2A, etc.) for verifying the information processing systems 102, for example. The verification execution system 208 is constituted of one or more verification computers 211, one or more verification devices 212, and a combination thereof, and these may be physical devices or virtual devices created by virtualization technology or a simulator.

If there are a plurality of verification centers 201, these verification centers may share retained information with each other in order to efficiently perform verification.

### <Function Management System>

In the example of the function management system 101 of FIG. 1A, information relating to the device of the information processing system 102 is received as device information 103, which is analyzed by the device information processing module 104, which then generates the system configuration information 105. The device information 103 may be inputted manually through a user interface 115 of the function management system 101, or may be acquired by being created from information pertaining to the information processing system 102.

The function management system 101 receives information relating to a modification request for functions of the information processing system 102 as verification range information 106, the function management module 107 compares the function modification request information with the function management information 108 to determine whether verification is necessary in order to use the function, and if verification is necessary, the function management system transmits the verification request information 110 to the verification center 201 regarding the function. The verification request information 110 includes the system configuration information 105 and the verification range information 106.

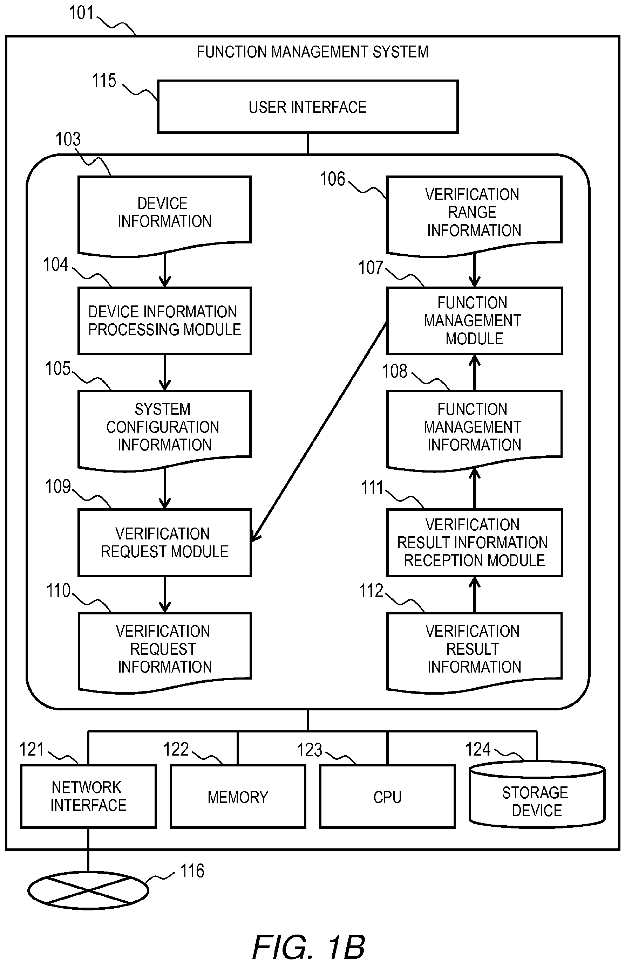

FIG. 1B is a block diagram showing a hardware configuration example of the function management system 101 of an embodiment of the present invention.

The function management system 101 has a network interface 121, a memory 122, a CPU 123 (central processing unit), and a storage device 124. The network interface 121 is connected to the communication network 116 and transmits data between the information processing system 102 and the verification center 201, etc. The memory 122 is a so-called primary storage device that stores data and the like that is referenced by programs executed by the CPU 123 and by the CPU 123. The CPU 123 is a processor that realizes various functions by executing programs stored in the memory 122. The storage device 124 is a so-called auxiliary storage device such as a hard disk drive, for example, that stores data and the like that is referenced by programs executed by the CPU 123 and by the CPU 123.

Programs for realizing the functions of the device information processing module 104, the function management module 107, the verification request module 109, and the verification result information reception module 111 may be stored in the storage device 124, for example, and as necessary, copied to the memory 122 and executed by the CPU 123. In other words, the processes executed by each module are in effect executed by the CPU 123. Similarly, the device information 103, the system configuration information 105, the verification range information 106, the function management information 108, the verification request information 110, and the verification result information 112 may be stored in the memory 122 and/or the storage device 124.

The function management system 101 further has the user interface 115. The user interface 115 includes input devices such as a keyboard and mouse, which receive data input from a user, and an output device such as an image display device that outputs data to the user, and this user interface functions by controlling the input devices and the output device by executing input/output programs stored by the CPU 123 in the memory 122.

### <Verification Center>

FIG. 2A is a block diagram showing a function configuration example of the verification center 201 of an embodiment of the present invention.

The verification center 201 associates the system configuration information 202 and the verification result information 203 with each information processing system 102 and retains the information.

The verification center 201 receives the verification request information 110 from the function management system 101, and a verification request information reception module 204 processes the verification request information.

The verification request information reception module 204 performs an updating process if the system configuration information 105 included in the verification request information 110 differs from the already stored system configuration information 202, and stores the received system configuration information 105 as the system configuration information 202.

A verification execution determination module 205 determines whether the function can be used without additional verification on the basis of the verification request information 110, the system configuration information 202, and the verification result information 203, and if the function can be used, it notifies an additional transmission destination extraction module 206 of a response. If verification has not been done (that is, if additional verification is needed), a verification execution module 207 performs a verification process using a verification execution system 208 and issues the results thereof to the additional transmission destination extraction module 206. The additional transmission destination extraction module 206 extracts the necessary notification destination, and a verification result information transmission module 209 selects information from among the system configuration information 202 and the verification result information 203 and transmits the verification result information to the function management system 101. The verification center 201 may additionally have a user interface 210 that performs a data input process from the user and a data output process to the user.

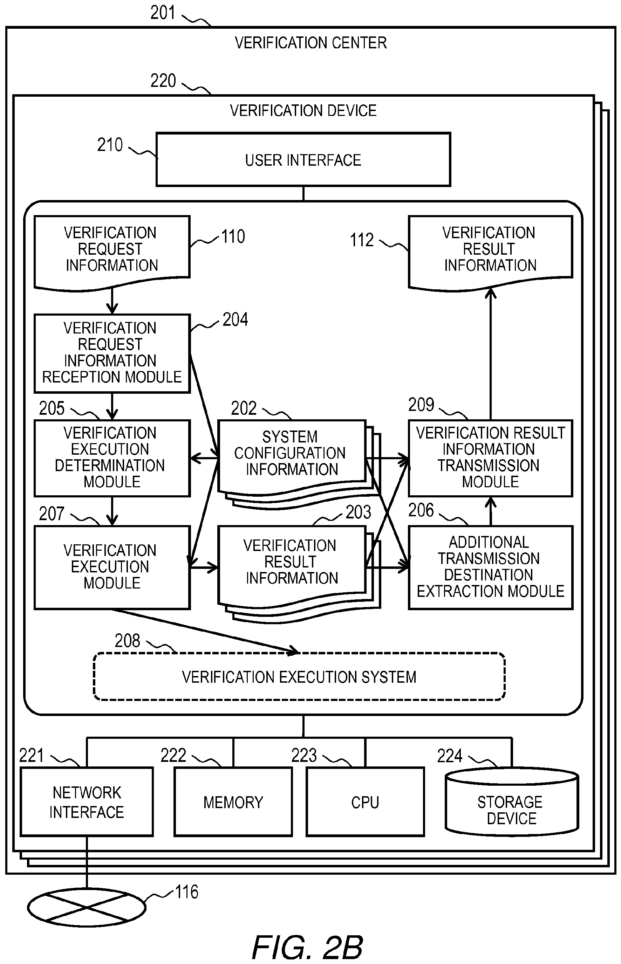

FIG. 2B is a block diagram showing a hardware configuration example of the verification center 201 of an embodiment of the present invention.

The verification center 201 has one or more verification devices 220. Each verification device 220 has a network interface 221, a memory 222, a CPU 223, and a storage device 224. The network interface 221 is connected to the communication network 116 and performs data transmission with the function management system 101, etc. The memory 222 is a so-called primary storage device that stores data and the like that is referenced by programs executed by the CPU 223 and by the CPU 223. The CPU 223 is a processor that realizes various functions by executing programs stored in the memory 222. The storage device 224 is a so-called auxiliary storage device such as a hard disk drive, for example, that stores data and the like that is referenced by programs executed by the CPU 223 and by the CPU 123.

Programs for realizing the functions of the verification request information reception module 204, the verification execution determination module 205, the verification execution module 207, the additional transmission destination extraction module 206, and the verification result information transmission module 209 may be stored in the storage device 224, for example, and as necessary, copied to the memory 222 and executed by the CPU 223. In other words, the processes executed by each module are in effect executed by the CPU 223. Similarly, the verification request information 110, the verification result information 112, the system configuration information 202, and the verification result information 203 may be stored in the memory 122 and/or the storage device 124.

The verification center 201 may further have the user interface 210. The user interface 210 includes input devices such as a keyboard and mouse, which receive data input from a user, and an output device such as an image display device that outputs data to the user, and this user interface functions by controlling the input devices and the output device by executing input/output programs stored by the CPU 223 in the memory 222.

### <System Configuration Information>

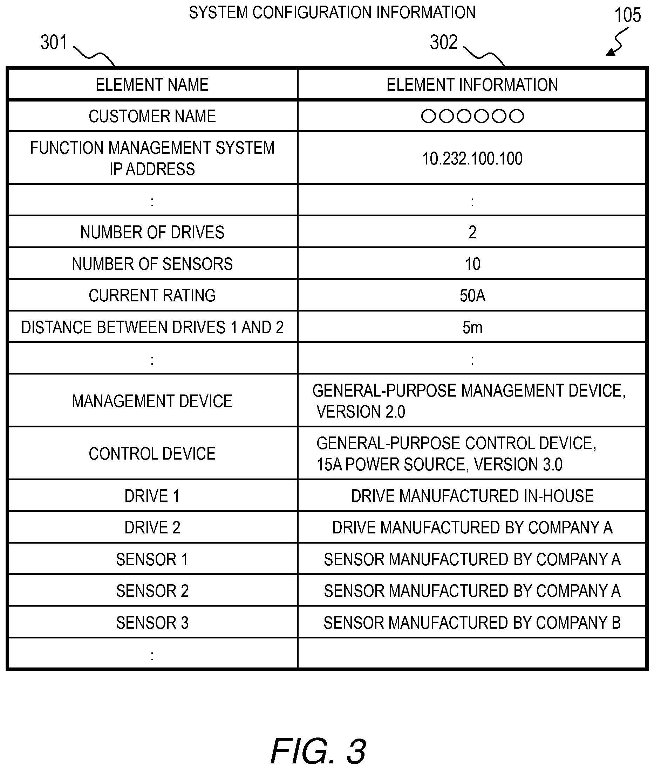

FIG. 3 is a descriptive view of an example of the system configuration information 105 according to an embodiment of the present invention.

The system configuration information 105 is constituted of an element name 301 that identifies an element item constituting the information processing system 102 and element information 302 indicating the content of the item, for example. The system configuration information 105 may include not only software and hardware information constituting the information processing system 102, but also information relating to the delivery destination of the information processing system 102 (customer names, for example), information relating to the function management system 101 (IP address of the function management system 101, for example), information relating to the physical state of elements constituting the system, electrical or mechanical information, etc., for example.

Specifically, if the information processing system 102 is a computer system that controls some device, for example, then the function to be verified is the function in which the information processing system 102 controls the device. In such a case, the system configuration information 105 may include information relating to the hardware and software configuration of the device being controlled, information relating to the hardware and software configuration of the computer system for controlling the device, and the like. Examples of information relating to the hardware configuration of the device include the type, number, rating, and installation position of the device being used, the type of apparatus being used in the device (such as sensors), and the like. Also, examples of information relating to the software configuration of the device and computer system include program names, version numbers, and the like.

### <Function Management Information>

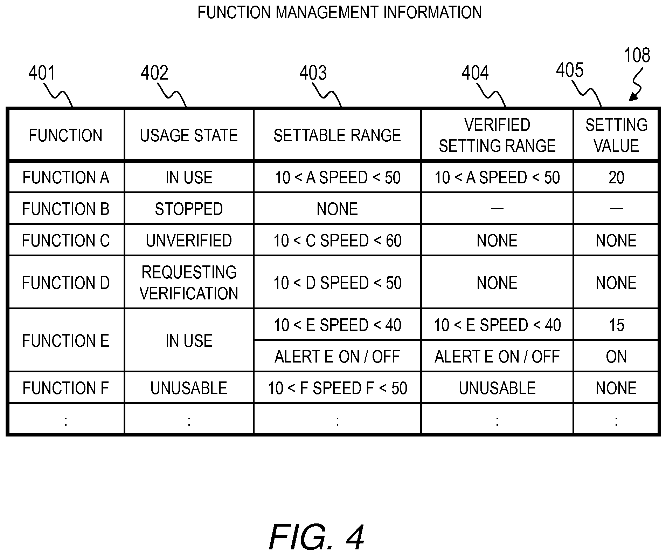

FIG. 4 is a descriptive view of an example of the function management information 108 according to an embodiment of the present invention.

The function management information 108 includes a function name 401 that identifies each function, a usage state 402 of each function in the information processing system, a settable range 403 of the setting value of each function (that is, the parameter value set when using each function), a verified setting range 404 that indicates the range for which verification was completed among the settable range of the setting value of each function in the information processing system, and a current setting value 405 of each function. Here, the verified setting range is a range of values for which it was verified that the functions could be used when setting the value in the information processing system 102 to be verified.

Possible values for the usage state 402 include, for example, "in use" indicating that the function is currently in use, "stopped" indicating that the function is stopped, "verification not yet executed" indicating that the verification request for activating the function has yet to be performed, "requesting verification" indicating that a verification request has been transmitted to the verification center and that a response is currently being awaited, and "unusable" indicating that the function for some reason cannot be used. If, in a function having a usage state 402 of "verification not yet executed", a verification request has been made for setting the range of setting values to activate the function, then the usage state 402 of the function is updated to "requesting verification", and once the verification is complete the usage state is updated to "stopped" and a setting value range for which the verification was completed is recorded in the verified setting range 404. Additionally, when use of the setting value range of the function is started, the usage state 402 is updated to "in use", and the setting value 405 is updated to the actually set value.

The settable range 403, depending on the function, sometimes does not have a setting value and sometimes has one or more setting values. Setting values can take on an integer value, a floating point decimal, a boolean value, various other types of values, or a combination thereof.

### <Function Activation Request Information>

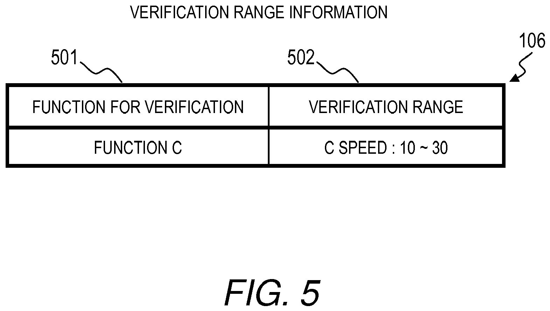

FIG. 5 is a descriptive view of an example of the verification range information 106 according to an embodiment of the present invention.

The verification range information 106 includes, for example, a function name 501 identifying the function to be activated, and a verification range 502 indicating the setting range of a function setting value. However, there may be cases in which the verification range information 106 includes neither the function name 501 nor the verification range 502. This type of verification range information 106 can be used when requesting confirmation of an updating state in the verification center 201 without requesting a new setting range, for example.

### <Function Activation Response Information>

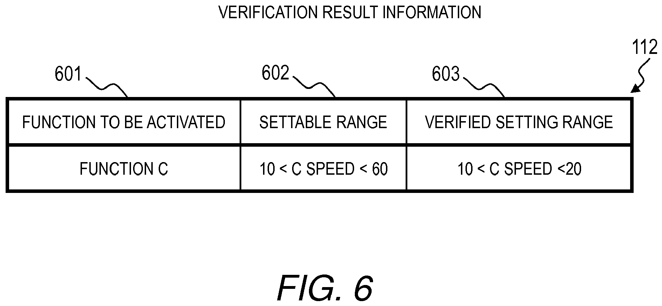

FIG. 6 is a descriptive view of an example of the verification result information 112 according to an embodiment of the present invention.

The verification result information 112 includes a function to be activated 601 indicating the name identifying the function to be activated, a settable range 602 of the setting value, and a verified setting range 603 indicating the setting range of a setting value for which verification has been completed, for example. However, there may be cases in which the verification result information 112 does not include any of the function to be activated 601, the settable range 602, or the verified setting range 603. This type of verification result information 112 is created in cases such as when the verified setting range 603 did not change as a result of the verification process performed in the verification center 201.

The verification result information 112 sometimes includes a settable range 602 that is narrower than the range of setting values for which verification was requested. This indicates that there is a restriction in the settable range as a result of a factor dependent on the computer system to be verified.

The verification result information 112 sometimes includes a verified setting range 603 that exceeds the range of setting values for which verification was requested, and sometimes includes a settable range 603 for a function other than the requested function. This results from verification by the verification center 201 exceeding the requested range, and is received by the function management system 101.

### <Updated Function Management Information>

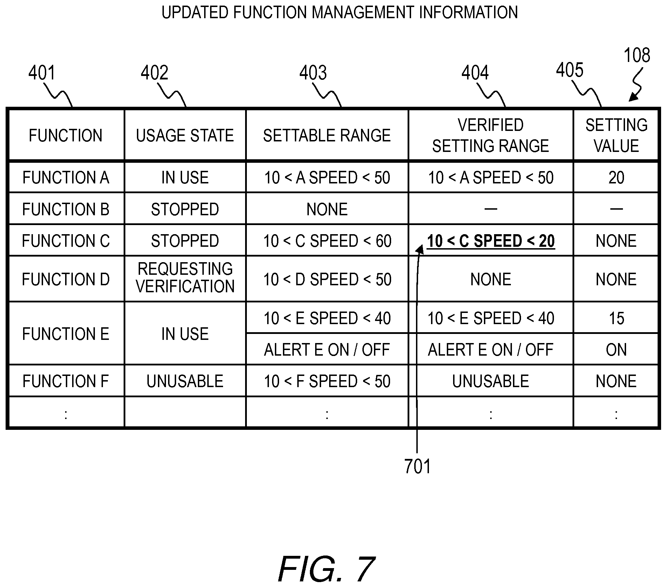

FIG. 7 is a descriptive view of another example of the function management information 108 according to an embodiment of the present invention.

Specifically, FIG. 7 discloses an example in which the function management system 101 having the function management information 108 of FIG. 4 transmits the verification request information 110 of FIG. 5, the verification result information 112 of FIG. 6, which is the result of verification, is received by the verification result information reception module 111, and the function management information 108 is updated on the basis of the verification result information 112. The verified setting range is updated on the basis of the verification result information 112, and thus, the usage state of a function C is stopped, or in other words, in a usable state (field 701).

### <Verification Request Process>

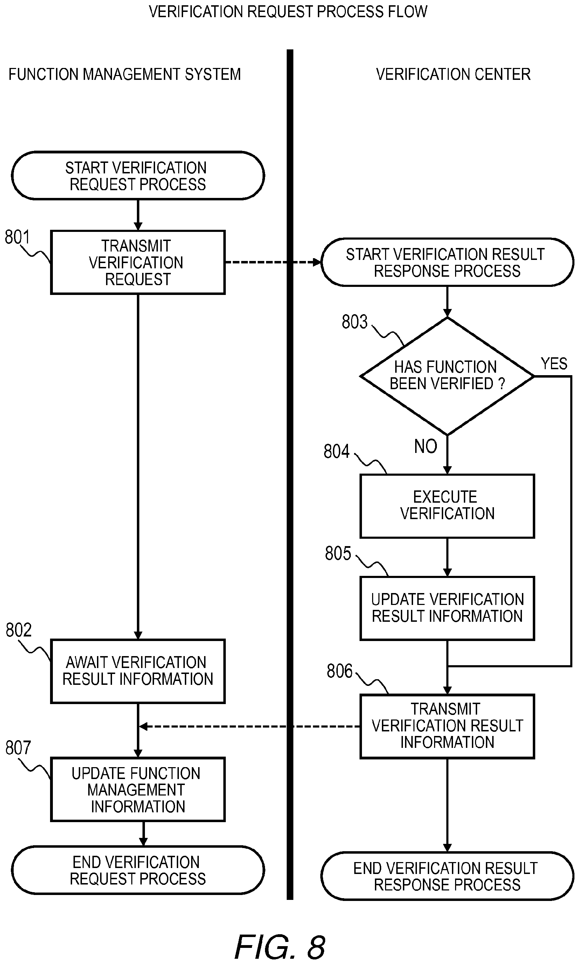

FIG. 8 is a flowchart showing an example of a verification request process executed by the function management system 101 according to an embodiment of the present invention, and a verification result transmission process executed by the verification center 201 according to the verification request process.

In the function management system 101, the verification request module 109 transmits the verification request information 110 to the verification center 201 (801), and then awaits a response (802). If a setting value range including a modified setting value is inputted to the function management system 101 as the verification range information 106 prior to the setting value of a function of the information processing system 102 being modified, for example, then the function management system 107 may determine whether verification of the setting value range is complete with reference to the function management information 108, and if at least a portion of the range has yet to be verified, then the verification request module 109 may transmit the verification request information 110 for the unverified range.

In the verification center 201, when the verification request information reception module 204 receives the verification request information 110, the verification execution determination module 205 determines whether verification of the function is necessary in the target information processing system 102, with reference to the system configuration information 202 and the verification result information 203 (803). Specifically, the verification execution determination module 205 refers to the verification result information 203, and if verification has yet to be performed for the setting range of the function for which verification has been requested in the information processing system 102 where verification has been requested in the verification request information 110, then the verification execution determination module 205 determines that verification of the function is necessary. If verification is necessary, then the verification execution module 207 performs verification using the verification execution system 208 (804).

Specifically, the verification execution module 207 may verify the function for which the range setting value designated by the verification request information 110 is set using a real verification computer 211 having an equivalent configuration to the information processing system 102 being verified and a real verification device 212 having an equivalent configuration to the device being verified, on the basis of the system configuration information 105 included in the verification request information 110. As a result, accurate verification is possible. Alternatively, verification execution module 207 may perform verification by simulating the information processing system 102 to be verified and the device to be verified on the basis of the system configuration information 105. As a result, quick verification is possible at low cost.

Once verification is complete, the verification execution module 207 updates the verification result information 203 so as to reflect the verification results (805). Then, regardless of whether or not verification has been performed, the verification result information transmission module 209 transmits the verification result information 112 to the function management system 101 that is the transmission source of the verification request information 110 (806), and completes the process of the verification center 201.

All verification results performed according to the verification request information 110 from the plurality of function management systems 101 may be stored in the verification result information 203, and of these results, the results of verification performed on the verification request information 110 in the current round of verification may be transmitted to the function management system 101 that is the transmission source of the verification request information 110 as the verification result information 112. At this time, all verification results performed according to past verification requests from the function management system 101 that is the transmission source of the verification request information 110 may be transmitted as the verification result information 112.

Furthermore, as will be mentioned later, the verification center 201 may also transmit the verification result information 112 to the function management system 101 managing the information processing system 102 having an equivalent configuration to the information processing system 102 to be verified.

The function management system 101 restarts the process when the verification result information reception module 111 receives the verification result information 112 and updates the function management information 108 (807), and ends the process of the function management system 101. The function management system 101 retaining the function management information 108 shown in FIG. 4, for example, transmits the verification request designating 10 to 30 as the setting value for a C speed, which is a parameter of a function C as shown in FIG. 5, and if as a result verification is successful in a range of 10 to 20 as shown in FIG. 6, then as shown in FIG. 7 the verified setting range 404 of the function C is updated such that the C speed is 10 to 20.

### <Testing/Delivery/Operation Process>

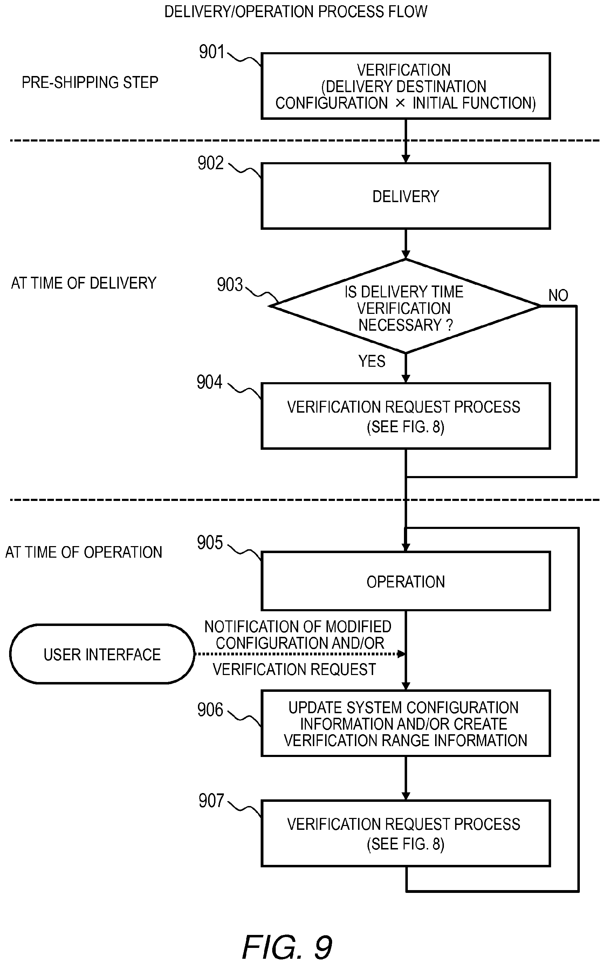

FIG. 9 is a flowchart showing an example of a process from prior to delivery to operation of the information processing system 102 according to an embodiment of the present invention.

Specifically, FIG. 9 shows an example of a process flow using the function management system 101 and the verification center 201 in the process prior to shipping, at the time of delivery, and during operation of the information processing system 102.

In the step prior to shipping, the verification center 201 performs verifications of the configuration of the information processing system 102 to be delivered and only functions of the information processing system 102 to be used during the initial stage at the delivery destination, and creates the initial stage verification result information (901). This verification may use another computer environment besides the verification execution system 208 of the verification center 201.

If additional verification at the time of delivery is required such as if the information processing system 102 is delivered (902) and the actual configuration at the delivery destination differs from the configuration verified during the verification step of step 901 (903), the verification center 201 performs the verification request process (904) shown in FIG. 8 for the configuration that is not yet verified, the setting range, or the like.

If, after the start of operation of the information processing system 102 (905), the information processing system 102 has undergone a change such as a verification request from a user, a software update, or a configuration modification of the information processing system, then the function management system 101 performs the verification request process shown in FIG. 8 after a necessary pre-process (906) such as updating of the system configuration information 105 and creation of the verification range information 106, and then in conjunction with the verification request process, only the functions verified by the verification center 201 are set to be usable (907).

By the process above, when the usage range of the function of the information processing system is expanded, the necessary verification is extracted and executed according to past verification results, information processing system configuration information, and the like. Thus, when shipping the information processing system, the minimum necessary verification is sufficient at this time, which enables a balance to be achieved between reduction in cost for verification and maintaining verification quality.

### <Function Management Console 1>

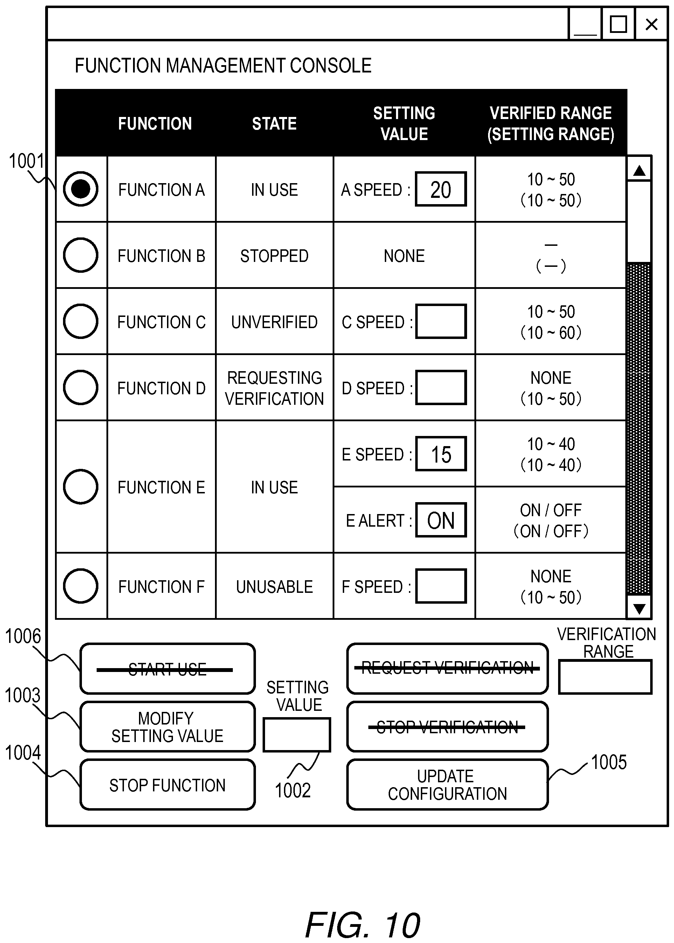

FIG. 10 is a descriptive view of a first example of a function management console that is the display screen of the function management information 101 according to an embodiment of the present invention.

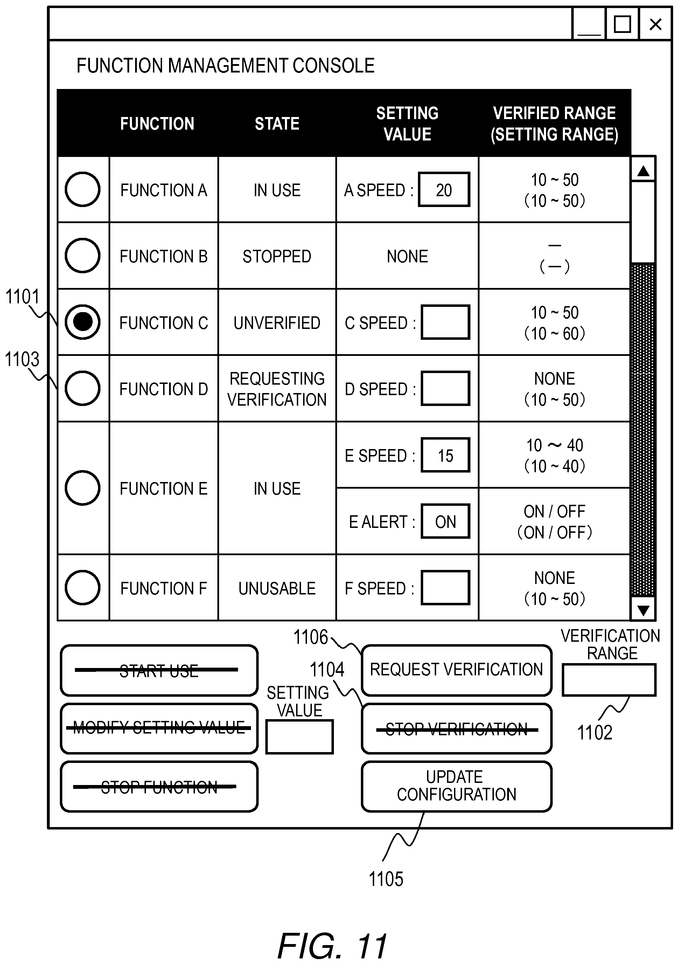

The function management console is displayed by the user interface 115 of the function management system 101. Specifically, the function management console displays the current state, the current setting value, the settable range for the setting value, the verified setting value range, and the like for each function. This information is based on the function management information 108 shown in FIGs. 4 and 7. The user can select any of these functions and issue a command to modify the state, modify the setting value, and the like for the state of the selected function. With reference to FIG. 10, a case will be described in which functions are selected in which the current states are "in use", "stopped", and "unusable". On the other hand, a case will be described later with reference to FIG. 11 in which functions are selected in which the current states are "unverified", and "requesting verification".

If, as in the example of FIG. 10, the function 1001 is selected, for example, then it is possible to issue commands to modify 1003 the setting value, which involves inputting the setting value 1002, and to stop 1004 the function, and it is also possible to issue a command to modify 1005 the configuration if the configuration of the information processing system 102 has been modified. If the command to modify 1003 the setting has been issued and the setting value range has been expanded as a result, then the process shown in FIG. 8 is executed for the expanded range. On the other hand, if a stopped function is selected, then unlike when an in-use function is selected, a command can be issued to start use 1006 of the stopped function, but a command to stop 1004 the function cannot be issued. Also, if a function that cannot be used is selected, then it is only possible to issue a command to update 1005 the configuration for the unusable function.

### <Function Management Console 2>

FIG. 11 is a descriptive view of a second example of a function management console that is the display screen of the function management information 101 according to an embodiment of the present invention.

In the function management console shown in FIG. 11, an unverified function 1101 is selected, for example, and if the verified function range is narrower than the settable range, then it is possible to issue a command to request verification 1106 to designate a verification range 1102. In such a case, the process shown in FIG. 8 is executed for the range designated in the verification range 1102. Also, if a function 1103 currently undergoing verification is selected, then it is possible to issue a command to stop 1104 the function. In any case, it is possible to issue a command for update notification 1105 if the configuration of the information processing system 102 has been updated.

The commands pertaining to the functions described with reference to FIGs. 10 and 11 may be executed by the user using an input device included in the user interface 115 to operate buttons displayed in the function management console such as buttons to modify setting value 1003, stop function 1004, update configuration 1005, start use 1006, stop verification 1104, and request verification 1106. According to the state of the selected function, the button corresponding to non-selectable commands may be set in an inoperable state such as by so-called greying out (shown with strikethroughs in FIG. 10, etc.). FIG. 10 shows that when an in-use function is selected, for example, commands can be issued to modify setting value 1003, stop function 1004, and update configuration 1005, but other commands (start use 1006, for example) cannot be issued.

By performing an operation with reference to the function management console such as described above, the user can easily see the state of the information processing system 102 and perform necessary processes.

### <Automatic Function Management

Operations such as using and stopping functions of the information processing system 102 may be performed manually by a manager, or the information processing system 102 may perform these automatically on the basis of the information attained from the function management system 101. Specifically, when, on the basis of the verification request information 110 from the function management system 101, the verification center 201 performs verification of the setting range with unverified functions and transmits verification result information 112 indicating that the verification has been completed, the function management system 101 may display through the function management console that the function state is "stopped", and with reference to that the manager may manually start use of the function in the information processing system 102. Alternatively, a configuration may be adopted in which the information processing system 102 is connected to the communication network 116, the function management system 101 transmits through the communication network 116 information to the information processing system 102 indicating that verification of the function is completed, and the information processing system 102 automatically starts use of the function upon receipt of the information.

### <Timer Control>

Also, the function management system 101 may set a time out value when transmitting the verification request information 110 to the verification center 201. If the verification result information 112 is not received within the designated time, the function management system 101 considers this to be a verification failure (802). In this manner, even if the verification process itself were to stop due to a fault in the function, for example, it is possible to issue a response indicating verification failure. Thereafter, the user of the information processing system 102 may determine whether or not to use the function.

### <Function Information Transmission Process by Verification Center>

Also, the verification center 201 may perform verification on its own and transmit the verification result information 112 even without receiving the verification request information 110 from the function management system 101.

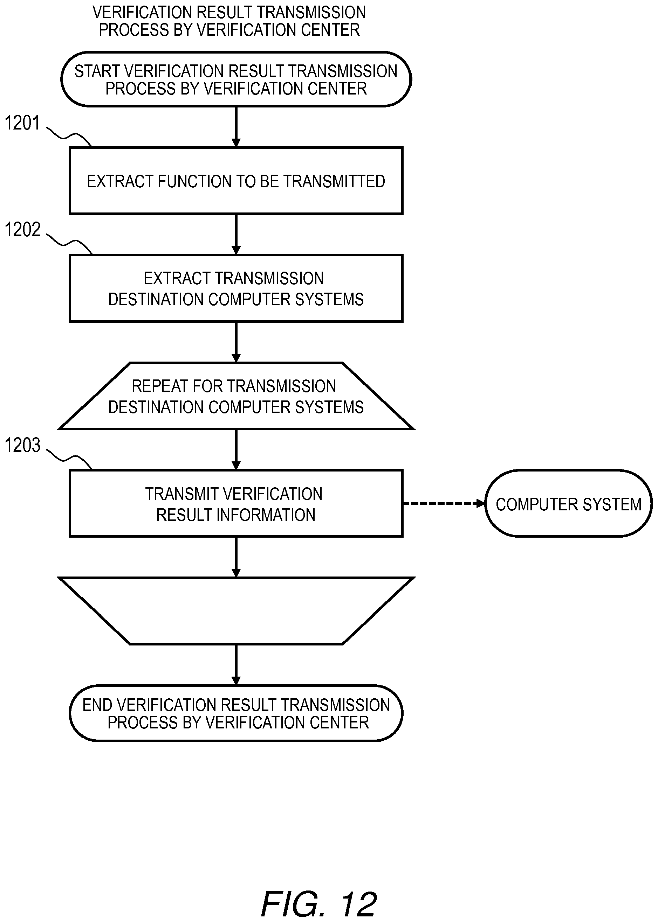

FIG. 12 is a flowchart showing an example of a function information transmission process performed by the verification center in which the verification center 201 of an embodiment of the present invention transmits the verification result information 112 without having received the verification request information 110.

In the function information transmission process by the verification center, the verification center 201 performs extraction (1201) of the function, for which verification result information is to be transmitted, from the system configuration information 202 and the verification result information 203, performs extraction (1202) of the function management system 101 to which the verification result information is to be transmitted, and then transmits (1203) the verification result information 112 to each destination function management system 101.

### <Broadcasting>

A first example will be described here in which the verification result transmission process by the verification center shown in FIG. 12 is used. If a verification process is performed pertaining to a function of the information processing system 102 managed by any of the function management systems 101, for example, then if there are other information processing systems 102 having a device configuration similar to that of the information processing system 102 for which the verification process is being performed, the verification center 201 transmits the verification result information 112 to the function management systems 101 corresponding to all such information processing systems 102 (1203).

The verification center 201 may determine whether the information processing systems 102 and the configuration of devices controlled thereby are the same by comparing the system configuration information 202 of the information processing systems 102, or by using a determination function. The verification center 201 may determine that the configurations are equivalent not only when the system configuration information 202 of two information processing systems 102 is identical, but when a predetermined condition is satisfied even if the system configuration information is not completely identical, for example.

The verification center 201 can transmit verification result information 112 to a plurality of function management systems 101, similar to the above case, even if verification were performed on the basis of the verification request information 110 from the function management system 101. The verification center 201 may, with reference to the system configuration information 202, search another information processing system 102 or the like having an equivalent configuration to the information processing system 102 or the like being managed by the function management system 101 that is the source of transmission of the verification request information 110, and then transmit the verification result information 112 to a function management system 101 managing the other information processing system found by search, for example (806).

By reusing the verification results pertaining to the information processing system 102 as described above to the other information processing system 102 having an equivalent configuration, it is possible to reduce the amount of computation required for verification.

### <Active Verification

Active verification is a second example in which the verification result transmission process by the verification center shown in FIG. 12 is used. If there are unused computer resources remaining in the verification center 201, and it is determined on the basis of predetermined conditions that a verification process can be executed, the verification center 201 uses the verification execution system 208 and performs the function verification process for setting value ranges that have not yet been verified, even if verification request information 110 has not been transmitted from the function management system 101, for example. As a result, if setting values that have not been verified up to now become usable, then the verification center 201 transmits the verification result information 112 to the function management system 101 corresponding to the information processing system 102 using the function. By performing verification that has not yet been requested in advance, it is possible to respond quickly when the request comes.

### <Emergency Stoppage of Function>

Emergency stoppage of functions is a third example in which the verification result transmission process by the verification center shown in FIG. 12 is used. If, for example, there is a need to stop use of a specific function due to a fault discovered as a result of a failure of the verification process or another newly discovered fault, the verification center 201 transmits the verification result information 112 to the function management system 101 corresponding to the information processing system 102 having the function. Specifically, the system configuration information 202 may include information indicating the function of each information processing system 102, with the additional transmission destination extraction module 206 extracting the information processing system 102 having the function for which verification failed with reference to the system configuration information 202, and transmitting the verification result information 112 to the function management system 101 corresponding to the extracted information processing system 102, for example. In this manner, it is possible to stop a function in which a fault might occur before the fault actually occurs.

### <Priority Control of Verification Process>

When a plurality of pieces of verification request information 110 are received, the verification center 201 may verify the information in the order received, or alternatively, may perform priority control according to the function and computer system. As the determination criteria for priority control, a combination of the verification request information 110, the system configuration information 202, the verification result information 203, and various information in other verification centers 201 may be used. A determination may be made, for example, to execute verification with priority when the information processing system 102 or the configuration of a device controlled thereby satisfies a specific condition (804). Alternatively, when customer information such as indicated in FIG. 3 is included in the system configuration information 202, the customer may determine the degree of priority. In this manner, it is possible to perform verification in the appropriate order according to the importance, urgency, or the like of verification.

Additionally, the verification center 201 may determine the environment in which to perform the verification of step 804 on the basis of a combination of the system configuration information 202, the verification result information 203, and various information in other verification centers 201. The verification center 201 may determine the degree of importance for verification to be performed on the basis of the system configuration information 202, the verification result information 203, and the like, and perform verification with a high degree of importance using the real verification computer 211 and the real verification device 212, with other verification being performed by simulation. Alternatively, the verification center 201 may perform verification using the real verification computer 211 or the like, if it is determined on the basis of the system configuration information 202 or the like that such verification is possible, and if not, may perform verification by simulation. Also, the verification center 201 may perform verification that is determined to have a high degree of urgency on the basis of the system configuration information 202, the verification result information 203, and the like in an environment where it is anticipated that verification will be completed in a shorter period of time (the highest performance verification computer 211 among a plurality thereof, simulation using high performance hardware, or the like). In this manner, it is possible to perform verification in the appropriate environment according to the importance, urgency, or the like of verification.

### <Evidence>

The verification center 201 can analyze and process information held therein and various history information, and can output information pertaining to the quantity and quality of the performed verification for the relevant information processing system 102.

### <Log Collection and Use>

The function management system 101 can transmit to the verification center 201 history information and various other information pertaining to the information processing system 102 at a predetermined time or trigger such as when verification is requested, for example. Information obtained by the verification center 201 can be reflected in various processes of the verification center 201 such as construction of the verification execution system 208 and priority control of the verification process.

### <Use of Information Processing System in Verification

The information processing system 102 may be used as the verification execution system 208. Also, an environment combining the information processing system 102 and the verification execution system 208 may be constructed, and this environment may be used for performing the verification process.

The present invention is not limited to the embodiments above, and includes various modification examples. The embodiment above was described in detail in order to explain the present invention in an easy to understand manner, but the present invention is not necessarily limited to including all configurations described, for example.

Some or all of the respective configurations, functions, processing units, processing means, and the like can be realized with hardware such as by designing an integrated circuit, for example. Additionally, the respective configurations, functions, and the like can be realized by software by the processor interpreting programs that execute the respective functions and executing such programs. Programs, data, tables, files, and the like realizing respective functions can be stored in a storage device such as a non-volatile semiconductor memory, a hard disk drive, or a solid state drive (SSD), or in a computer-readable non-transitory data storage medium such as an IC card, an SD card, or a DVD.

Control lines and data lines regarded as necessary for explanation have been described, but not all control lines and data lines in the product have necessarily been shown. In reality, almost all components can be thought of as connected to each other.

## Claims

1. A verification system (100) that verifies functions of a plurality of information processing systems (102), the verification system comprising: a verification center (201); and a plurality of function management systems (101) that are coupled through a network (116) to the verification center,
wherein the verification center has a first processor and a first storage device accessed by the first processor,
wherein each of the function management systems has a second processor (123) and a second storage device (124) accessed by the second processor,
wherein the second storage device retains function management information (108) for associating a function of each of the information processing systems corresponding to each of the function management systems with a range of parameter values that can be set for the function; with a range of parameter values, among the range of parameter values that can be set, for the functions that have been verified for when the parameter values have been set; and with actually set parameter values,
wherein, if the actually set parameter value is modified to a value outside of the verified range, then prior to the modification, the second processor transmits to the verification center a verification request of the function in which a parameter value in a range including the modified value is set, and
wherein the first processor executes verification on the basis of the verification request, and transmits results thereof to the function management system from which the verification request was transmitted.

2. The verification system according to claim 1,
wherein the information processing system is a control system of a predetermined device,
wherein the function is a function by which the information processing system controls the device,
wherein the second storage device additionally retains system configuration (105) information indicating configurations of the information processing system and the device,
wherein the second processor includes the system configuration information in the verification request and transmits the verification request, and
wherein the first processor executes verification of the function controlling the device for which the parameter value is set in the information processing system in a range including the modified value, on the basis of the system configuration information.

3. The verification system according to claim 2,
wherein the verification center further has a verification computer (211) having an equivalent configuration to the information processing system, and a verification device (220) that is controlled by the verification computer and that has an equivalent configuration to the device, and
wherein the first processor executes verification of the function using the verification computer and the verification device.

4. The verification system according to claim 3,
wherein the first processor selects verification using the verification computer and the verification device or verification by simulation executed by the first processor, on the basis of at least one of the system configuration information and past verification results, and executes the selected verification.

5. The verification system according to claim 2,
wherein the first processor executes verification of the function by executing the simulation of the information processing system and the device on the basis of the system configuration information.

6. The verification system according to claim 2,
wherein the first storage device retains the system configuration information pertaining to each of the information processing systems corresponding to each of the function management systems,
wherein, when verification of functions of any of the information processing systems is executed and results thereof are transmitted to the function management system corresponding to the information processing system subject to the verification, if it is determined that the configuration of the information processing system subject to the verification is equivalent to the configuration of another information processing system on the basis of the system configuration information, the first processor also transmits the results of executing the verification to the function management system corresponding to said another information processing system.

7. The verification system according to claim 2,
wherein the first processor executes verification of the function in the range of parameters that have not yet been verified in any of the information processing systems on the basis of the system configuration information if it is determined that verification is possible on the basis of a predetermined condition regardless of whether or not the verification request has been received, and transmits results of the verification to the function management system corresponding to the information processing system using the function.

8. The verification system according to claim 2,
wherein the first storage device retains the system configuration information pertaining to each of the information processing systems corresponding to each of the function management systems,
wherein the system configuration information includes information indicating the function present in each of the information processing systems, and
wherein, if the verification of the function fails, the first processor transmits the results of the verification to the function management system corresponding to the information processing system having the function, on the basis of the system configuration information.

9. The verification system according to claim 2,
wherein, when the first processor receives the verification requests from the plurality of function management systems, the first processor determines an order of priority of the verification requests received from the plurality of function management systems on the basis of at least one of the system configuration information and past verification results, and executes verification based on the verification request in order from the highest priority within the determined order of priority.

10. The verification system according to claim 1,
wherein, if after transmitting the verification request the verification results from the verification center are not received within a predetermined time, the second processor determines that the verification based on the verification request has failed.

11. The verification system according to claim 1,
wherein each of the function management systems further has an input/output interface that displays the function management information and receives input of information to select the function to be verified and the range of the parameter values, and
wherein the second processor generates the verification request on the basis of the information inputted to the input/output interface.

## Patentansprüche

1. Verifizierungssystem (100), das Funktionen aus einer Vielzahl von Informationsverarbeitungssystemen (102) verifiziert, wobei das Verifizierungssystem Folgendes umfasst: ein Verifizierungszentrum (201); und eine Vielzahl von Funktionsverwaltungssystemen (101), die durch ein Netzwerk (116) mit dem Verifizierungszentrum gekoppelt sind,
wobei das Verifizierungszentrum einen ersten Prozessor und eine erste Speichervorrichtung, auf die durch den ersten Prozessor zugegriffen wird, aufweist,
wobei jedes der Funktionsverwaltungssysteme einen zweiten Prozessor (123) und eine zweite Speichervorrichtung (124), auf die durch den zweiten Prozessor zugegriffen wird, aufweist,
wobei die zweite Speichervorrichtung Funktionsverwaltungsinformationen (108) speichert, um eine Funktion von jedem der Informationsverarbeitungssysteme, die jedem der Funktionsverwaltungssysteme entsprechen, einem Bereich von Parameterwerten, die für die Funktion eingestellt sein können; einem Parameterwertebereich aus dem Bereich von Parameterwerten, die für die Funktionen, die verifiziert worden sind, für den Fall eingestellt sein können, dass die Parameterwerte eingestellt worden sind; und tatsächlich eingestellten Parameterwerten zuzuordnen,
wobei dann, wenn der tatsächlich eingestellte Parameterwert auf einen Wert außerhalb des verifizierten Bereichs modifiziert wird, der zweite Prozessor vor der Modifizierung an das Verifizierungszentrum eine Verifizierungsanforderung der Funktion sendet, in der ein Parameterwert in einem Bereich, der den modifizierten Wert beinhaltet, eingestellt ist, und
wobei der erste Prozessor ein Verifizieren auf Basis der Verifizierungsanforderung ausführt und dessen Ergebnisse an das Funktionsverwaltungssystem sendet, von dem die Verifizierungsanforderung gesendet worden ist.

2. Verifizierungssystem gemäß Anspruch 1,
wobei das Informationsverarbeitungssystem ein Steuerungssystem einer vorbestimmten Vorrichtung ist,
wobei die Funktion eine Funktion ist, durch die das Informationsverarbeitungssystem die Vorrichtung steuert,
wobei die zweite Speichervorrichtung zusätzlich Systemkonfigurations (105) - Informationen speichert, die Konfigurationen des Informationsverarbeitungssystems und der Vorrichtung anzeigen,
wobei der zweite Prozessor die Systemkonfigurationsinformationen in der Verifizierungsanforderung umfasst und die Verifizierungsanforderung sendet, und
wobei der erste Prozessor ein Verifizieren der Funktion, welche die Vorrichtung steuert, für die der Parameterwert in dem Informationsverarbeitungssystem in einem Bereich, der den modifizierten Wert umfasst, auf Basis der Systemkonfigurationsinformationen eingestellt ist, ausführt.

3. Verifizierungssystem gemäß Anspruch 2,
wobei das Verifizierungszentrum ferner einen Verifizierungscomputer (211), der gegenüber dem Informationsverarbeitungssystem eine äquivalente Konfiguration aufweist, und eine Verifizierungsvorrichtung (220), die von dem Verifizierungscomputer gesteuert wird und die eine gegenüber der Vorrichtung äquivalente Konfiguration aufweist, aufweist, und
wobei der erste Prozessor ein Verifizieren der Funktion unter Anwendung des Verifizierungscomputers und der Verifizierungsvorrichtung ausführt.

4. Verifizierungssystem gemäß Anspruch 3,
wobei der erste Prozessor ein Verifizieren unter Anwendung des Verifizierungscomputers und der Verifizierungsvorrichtung oder ein Verifizieren durch eine durch den ersten Prozessor ausgeführte Simulation auf Basis zumindest einer der Systemkonfigurationsinformationen und der bisherigen Verifizierungsergebnisse auswählt, und die ausgewählte Verifizierung ausführt.

5. Verifizierungssystem gemäß Anspruch 2,
wobei der erste Prozessor ein Verifizieren der Funktion durch Ausführen der Simulation des Informationsverarbeitungssystems und der Vorrichtung auf Basis der Systemkonfigurationsinformationen ausführt.

6. Verifizierungssystem gemäß Anspruch 2,
wobei die erste Speichervorrichtung die Systemkonfigurationsinformationen speichert, die zu jedem der Informationsverarbeitungssysteme, die jedem der Funktionsverwaltungssysteme entsprechen, gehören,
wobei dann, wenn ein Verifizieren von Funktionen von einem beliebigen der Informationsverarbeitungssysteme ausgeführt und dessen Ergebnisse an das Funktionsverwaltungssystem, das dem Informationsverarbeitungssystem gemäß der Verifizierung entspricht, gesendet werden, und zwar wenn bestimmt wird, dass die Konfiguration des Informationsverarbeitungssystems gemäß der Verifizierung äquivalent zur Konfiguration eines weiteren Informationsverarbeitungssystems auf Basis der Systemkonfigurationen ist, der erste Prozessor auch die Ergebnisse eines Ausführens der Verifizierung an das Funktionsverwaltungssystem, das dem weiteren Informationsverarbeitungssystem entspricht, sendet.

7. Verifizierungssystem gemäß Anspruch 2,
wobei der erste Prozessor ein Verifizieren der Funktion im Bereich der Parameter ausführt, die in einem beliebigen der Informationsverarbeitungssysteme auf Basis der Systemkonfigurationsinformationen noch nicht verifiziert worden sind, wenn bestimmt wird, dass ein Verifizieren auf Basis einer vorbestimmten Bedingung unabhängig davon, ob die Verifizierungsanforderung empfangen worden ist, möglich ist, und Ergebnisse der Verifizierung an das Funktionsverwaltungssystem, das dem Informationsverarbeitungssystem entspricht, unter Anwendung der Funktion sendet.

8. Verifizierungssystem gemäß Anspruch 2,
wobei die erste Speichervorrichtung die Systemkonfigurationsinformationen, die zu jedem der Informationsverarbeitungssysteme, die jedem der Funktionsverwaltungssysteme entsprechen, gehören, speichert,
wobei die Systemkonfigurationsinformationen Informationen umfassen, welche die Funktion anzeigen, die in jedem der Informationsverarbeitungssysteme vorhanden ist, und
wobei dann, wenn das Verifizieren der Funktion fehlschlägt, der erste Prozessor die Ergebnisse der Verifizierung an das Funktionsverwaltungssystem, das dem Informationsverarbeitungssystem, welche die Funktion aufweist, entspricht, auf Basis der Systemkonfigurationsinformationen sendet.

9. Verifizierungssystem gemäß Anspruch 2,
wobei dann, wenn der erste Prozessor die Verifizierungsanforderungen von der Vielzahl der Funktionsverwaltungssysteme empfängt, der erste Prozessor eine Prioritätsreihenfolge der von der Vielzahl von Funktionsverwaltungssystemen empfangenen Verifizierungsanforderungen auf Basis von mindestens einer der Systemkonfigurationsinformationen und der bisherigen Verifizierungsergebnisse bestimmt, und ein Verifizieren auf Basis der Verifizierungsanforderung in der Reihenfolge von der höchsten Priorität innerhalb der bestimmten Prioritätsreihenfolge ausführt.

10. Verifizierungssystem gemäß Anspruch 1,
wobei dann, wenn nach einem Senden der Verifizierungsanforderung die Verifizierungsergebnisse vom Verifizierungszentrum nicht innerhalb einer vorbestimmten Zeitspanne empfangen werden, der zweite Prozessor bestimmt, dass die Verifizierung auf Basis der Verifizierungsanforderung fehlgeschlagen ist.

11. Verifizierungssystem gemäß Anspruch 1,
wobei jedes der Funktionsverwaltungssysteme ferner eine Eingabe-/Ausgabe-Schnittstelle aufweist, welche die Funktionsverwaltungsinformationen anzeigt und eine Informationseingabe empfängt, um die zu verifizierende Funktion und den Parameterwertebereich auszuwählen, und
wobei der zweite Prozessor die Verifizierungsanforderung auf Basis der in die Eingabe-/Ausgabe-Schnittstelle eingegebenen Informationen erzeugt.

## Revendications

1. Système de vérification (100) qui vérifie les fonctions d'une pluralité de systèmes de traitement d'informations (102), le système de vérification comprenant : un centre de vérification (201) ; et une pluralité de systèmes de gestion de fonctions (101) qui sont couplés au centre de vérification par l'intermédiaire d'un réseau (116) ;
dans lequel le centre de vérification présente un premier processeur et un premier dispositif de stockage auquel le premier processeur accède ;
dans lequel chacun des systèmes de gestion de fonctions présente un second processeur (123) et un second dispositif de stockage (124) auquel le second processeur accède ;
dans lequel le second dispositif de stockage conserve des informations de gestion de fonctions (108) pour associer une fonction de chacun des systèmes de traitement d'informations correspondant à chacun des systèmes de gestion de fonctions, à une plage de valeurs de paramètres qui peuvent être définies pour la fonction ; à une plage de valeurs de paramètres, parmi la plage de valeurs de paramètres qui peuvent être définies, pour les fonctions qui ont été vérifiées lorsque les valeurs de paramètres ont été définies ; et à des valeurs de paramètres réellement définies ;
dans lequel, si la valeur de paramètre réellement définie est modifiée en une valeur en dehors de la plage vérifiée, alors, avant la modification, le second processeur transmet, au centre de vérification, une demande de vérification de la fonction dans laquelle une valeur de paramètre dans une plage incluant la valeur modifiée est définie ; et
dans lequel le premier processeur exécute une vérification sur la base de la demande de vérification, et transmet les résultats de celle-ci au système de gestion de fonctions à partir duquel la demande de vérification a été transmise.

2. Système de vérification selon la revendication 1,
dans lequel le système de traitement d'informations est un système de commande d'un dispositif prédéterminé ;
dans lequel la fonction est une fonction au moyen de laquelle le système de traitement d'informations commande le dispositif ;
dans lequel le second dispositif de stockage conserve en outre des informations de configuration de système (105) indiquant des configurations du système de traitement d'informations et du dispositif ;
dans lequel le second processeur inclut les informations de configuration de système dans la demande de vérification et transmet la demande de vérification ; et
dans lequel le premier processeur exécute une vérification de la fonction commandant le dispositif pour lequel la valeur de paramètre est définie dans le système de traitement d'informations dans une plage incluant la valeur modifiée, sur la base des informations de configuration de système.

3. Système de vérification selon la revendication 2,
dans lequel le centre de vérification présente en outre un ordinateur de vérification (211) présentant une configuration équivalente à celle du système de traitement d'informations, et un dispositif de vérification (220) qui est commandé par l'ordinateur de vérification et qui présente une configuration équivalente à celle du dispositif ; et
dans lequel le premier processeur exécute une vérification de la fonction en utilisant l'ordinateur de vérification et le dispositif de vérification.

4. Système de vérification selon la revendication 3, dans lequel le premier processeur sélectionne une vérification en utilisant l'ordinateur de vérification et le dispositif de vérification, ou une vérification par une simulation exécutée par le premier processeur, sur la base d'au moins l'un des éléments parmi les informations de configuration de système et des résultats de vérification antérieurs, et exécute la vérification sélectionnée.

5. Système de vérification selon la revendication 2,
dans lequel le premier processeur exécute une vérification de la fonction en exécutant la simulation du système de traitement d'informations et du dispositif sur la base des informations de configuration de système.

6. Système de vérification selon la revendication 2,
dans lequel le premier dispositif de stockage conserve les informations de configuration de système connexes à chacun des systèmes de traitement d'informations correspondant à chacun des systèmes de gestion de fonctions ;
dans lequel, lorsqu'une vérification de fonctions de l'un quelconque des systèmes de traitement d'informations est exécutée et que des résultats connexes sont transmis au système de gestion de fonctions correspondant au système de traitement d'informations soumis à la vérification, s'il est déterminé que la configuration du système de traitement d'informations soumis à la vérification est équivalente à la configuration d'un autre système de traitement d'informations, sur la base des informations de configuration de système, le premier processeur transmet également les résultats de l'exécution de la vérification au système de gestion de fonctions correspondant audit autre système de traitement d'informations.

7. Système de vérification selon la revendication 2,
dans lequel le premier processeur exécute une vérification de la fonction dans la plage de paramètres qui n'ont pas encore été vérifiés dans l'un quelconque des systèmes de traitement d'informations, sur la base des informations de configuration de système, s'il est déterminé qu'une vérification est possible sur la base d'une condition prédéterminée, que la demande de vérification ait été reçue ou non, et transmet des résultats de la vérification au système de gestion de fonctions correspondant au système de traitement d'informations utilisant la fonction.

8. Système de vérification selon la revendication 2,
dans lequel le premier dispositif de stockage conserve les informations de configuration de système connexes à chacun des systèmes de traitement d'informations correspondant à chacun des systèmes de gestion de fonctions ;
dans lequel les informations de configuration de système incluent des informations indiquant la fonction présente dans chacun des systèmes de traitement d'informations ; et
dans lequel, si la vérification de la fonction échoue, le premier processeur transmet les résultats de la vérification au système de gestion de fonctions correspondant au système de traitement d'informations présentant la fonction, sur la base des informations de configuration de système.

9. Système de vérification selon la revendication 2,
dans lequel, lorsque le premier processeur reçoit les demandes de vérification en provenance de la pluralité de systèmes de gestion de fonctions, le premier processeur détermine un ordre de priorité des demandes de vérification reçues en provenance de la pluralité de systèmes de gestion de fonctions, sur la base d'au moins l'un des éléments parmi les informations de configuration de système et des résultats de vérification antérieurs, et exécute une vérification basée sur la demande de vérification, dans l'ordre, à partir de la priorité la plus élevée, selon l'ordre de priorité déterminé.

10. Système de vérification selon la revendication 1,
dans lequel, suite à la transmission de la demande de vérification, les résultats de vérification en provenance du centre de vérification ne sont pas reçus dans un délai prédéterminé, le second processeur détermine que la vérification basée sur la demande de vérification a échouée.

11. Système de vérification selon la revendication 1,
dans lequel chacun des systèmes de gestion de fonctions présente en outre une interface d'entrée/sortie qui affiche les informations de gestion de fonctions et reçoit une entrée d'informations pour sélectionner la fonction à vérifier et la plage des valeurs de paramètres ; et
dans lequel le second processeur génère la demande de vérification sur la base des informations entrées dans l'interface d'entrée/sortie.
